# EUROPEAN PATENT APPLICATION

(11) **EP 2 439 685 A1**
(43) Date of publication of application: **11.04.2012**
(21) Application number: 10176481.9
(22) Date of filing: 13.09.2010
(51) Int. Cl.: G06Q 10/00, G06F 17/30, G06F 11/14

(54) **Methods for reducing the size of a database**

(71) Applicant: Recuerdo Global Limited, D12 Dublin (IE)
(72) Inventor: Leung, Oly, Co. Dublin, Dublin (IE)
(74) Representative: Hanna, Peter William Derek

(57) **Abstract**

Methods for reducing the size of a database and increasing the maximum number of concurrent users, are described. A database interface driver controls archival and retrieval operations. Data items are transferred (120) to a transient interface such as a dummy database, where they are parsed (150) to path and filename, serialized (160) and sent to storage (170) as discrete files. Retrieval is performed by detecting (220) a query, parsing (250) the query to valid paths and filenames, and deserializing (260) the stored files as data items which are then transparently made available to the user (290) via the transient interface.

## Description

### Field of the Invention

The present invention relates to systems, methods and computer programs for efficiently reducing the size of any database, while also making its contents searchable and shareable over a computer network to multiple users, and increasing the maximum number of concurrent users. In particular, the invention provides a database interface driver and a transient interface means for archival and retrieval operations between an existing or active database and storage resources.

The invention is primarily, though not exclusively, concerned with client applications and services for reducing the size of a database having a particular database format or schema employed in multi-user client-server network environments.

### Background to the Invention

Databases, like other kinds of file systems, are susceptible to failure. Apart from external factors such as hardware failure and human error, a file can become statistically more prone to corruption once it reaches a certain critical size - the probability of this failure occurring increases in correlation with the increase of the file's size. The exact point of failure varies from format to format, such as a Lotus Domino NSF file, or a Microsoft Outlook PST file. For example, a Microsoft Outlook PST file has a 2GB file size limit.

Backing up the database does not offer a complete solution as an oversized file is still corruptible once restored and used as before.

A popular solution is to archive its older entries into a new database, in order to reduce the size of an active database. The downside to this solution is that access to entries in this archive database is not always readily available as it has to be loaded. To access items in this archived database, it must be both available and it must be mounted and activated by its program - this is often not feasible for a number of reasons, for example the required archive database may backed up on tape and this tape is off-site. A user who had access to a client-side archive may have left employment, had their account and password deleted.

The growing size of e-mail archives, to take one example, coupled with the requirement to retain e-mail records for regulatory compliance and legal discovery, has created a market for e-mail archiving tools. Available e-mail archiving products are used alongside well-known email applications such as Microsoft Outlook, Lotus Domino, and others, and provide a searchable archive of all e-mail messages for a defined period of time. Such email data stores can be used as part of a corporate records repository for legal and business uses, but can also be used as a way to reduce the size of production e-mail data stores to gain operational efficiencies (reduce backup time, improve recovery and eliminate the need for quotas while still keeping the active data store lean).

There are however problems of access if the archive database is not well organized and fully searchable, and of course there will be the same overload problems as with the original database when an archive database becomes too full. This problem is particularly acute when archives are organized as file structures, because all file structures have a finite maximum size, dictated for example by the number of address bits, for example as dictated by a 32-bit or a 64-bit addressing system. The maximum size may be very large, but the critical size limit can nevertheless be reached in all database applications in use today. Database files can reach many gigabytes, and even terabytes, in size. Corruption of these files can lead to catastrophic data loss at worst and considerable downtime at best.

These issues are amplified when database programs are built using a client-server structure. In these cases, each client database is either mirrored on the server or is encapsulated in a master database. Again, these files are susceptible to corruption for the same reasons as outlined above.

A further problem with database applications generally is access overload. A limit may be reached in relation to the number of concurrent users or clients who can gain access. A database being accessed by multiple users may have a limit as to how many users can connect to it concurrently. For example, Microsoft Access 2007 has a "theoretical" maximum of 255 concurrent users accessing a database. However, Microsoft recommends that "no more than 25 - 50" concurrent users should access its database. (http://support.microsoft.com/kb/299373) The number of concurrent users that a database can support plays a major part in choosing the database schema that will be used in a system.

The present invention seeks to find a solution to the problems associated with database overload and ever-expanding archives while also allowing archived information to be quickly accessible through an operating system's file system.

The present invention solves the problem of corruptible databases by optimising the size of an active database, and allowing both active and archived information to be accessible to a greater number of concurrent users than would normally be possible, as constrained by an active database format or schema.

### Summary of Invention

The present invention provides methods, apparatus and programs, for reducing the size of an existing database and increasing the maximum number of concurrent users, in accordance with the claims which follow.

### Brief Description of the Drawings

Fig. 1 is a general flowchart illustrating how a group of database items are moved from an existing database to a dummy database to be serialized as discrete files, in accordance with the invention.
Fig. 2 is a general flowchart illustrating how a user query which is made for a database item is detected by a database interface driver and made available for retrieval, in accordance with the invention.
Figs. 3A -3C illustrate how database items are to be moved to the dummy database, in accordance with Fig. 1.
Figs. 4A and 4B illustrate the steps of querying the dummy database, in accordance with Fig. 2.
Figs. 5A and 5B illustrate the steps of clearing the dummy database, upon a new query to it being detected, in accordance with Fig. 2.
Figure 6 is a schematic illustration of how a large number of concurrent users can access database items using multiple instances of the dummy database.

### Detailed Description

A preferred embodiment of the present invention firstly provides a "dummy" database, which may generally be described as a pre-defined data structure, initially being empty, or containing no data items. A "data item" may be defined generally as a record, file, sub-folder, folder, binder, object, component, framework or simply a block or blocks of data that it is desired to permanently or temporarily move from an existing database to persistent storage. This includes, but is not limited to, data that has been designated for archiving in the context of conventional file archive systems.

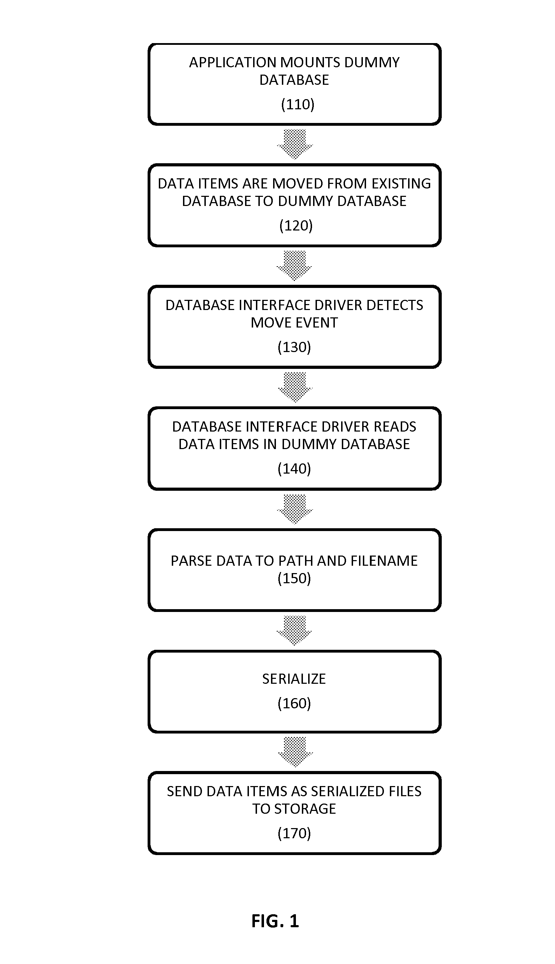

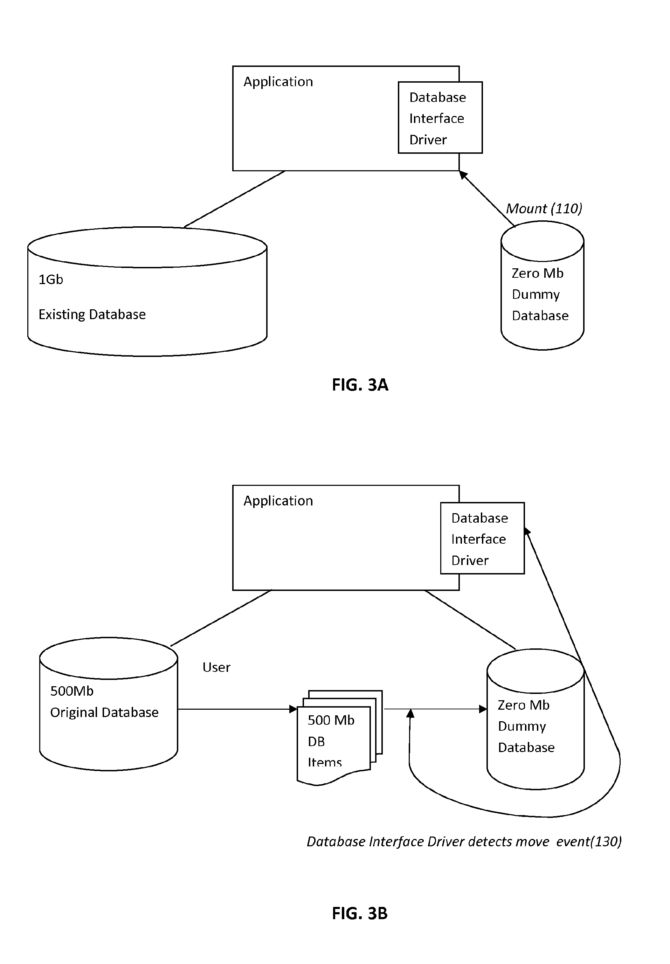

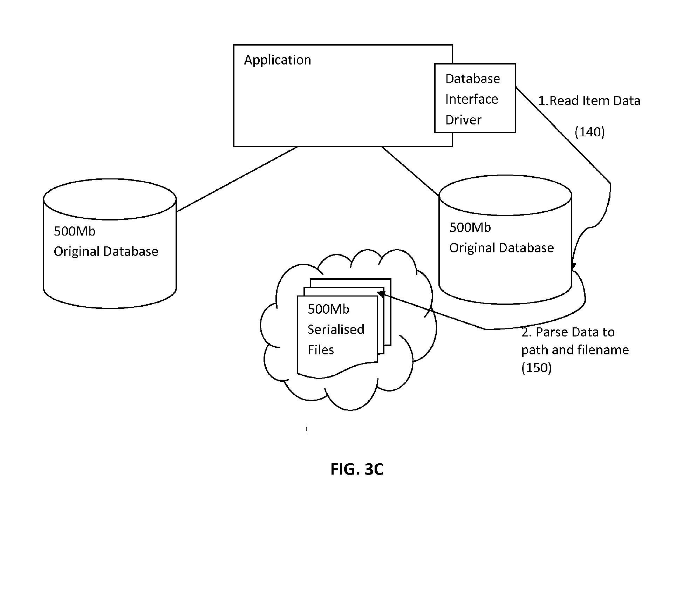

Referring to Fig. 1, to begin with, a dummy database, which contains no data items, is initialized and mounted by an application program (110). Step (110) is also illustrated in Fig. 3A. This dummy database will be used as an interface to both write items to storage or "archive" items, and as a "proxy" to allow archived items to be retrieved and read from storage, and shared with other users. To "archive" items from an existing database, for example before the size of the existing database has reached a critical level, the selected items are moved to the dummy database (120). Once an item exists inside the dummy database, this event is detected (130) by a database interface driver, which may be embodied as a separate program, or as a component of the application program. Steps (120, 130) are also illustrated in Fig. 3B. The database interface driver then reads items in the dummy database (140), and parses (150) the data items according to assigned paths and filenames, or by any other file extensions. The path and name for these files is based on the values associated with each item. Then the data items are serialized (160) as discrete files in memory and written (170) to a storage medium. This can be done by table, by column, by row, by value, etc. The data files can be serialized in any number of ways, for example as XML files, a proprietary format that is recognised by the application, as a bitstream, etc. This method prevents duplicate entries, as required. Steps (120-170) are also illustrated in Fig. 3C.

Once the item is serialized and a new operation is performed which does not require the current item to be present, it is removed from the existing database, resulting in a size reduction in the existing database, as illustrated by Figs 3A and 3B. This process is repeated for each item that is moved into the dummy database. These items no longer exist in the existing database but, as described below, will still be accessible to users from storage through the interface of the dummy database and the database interface driver.

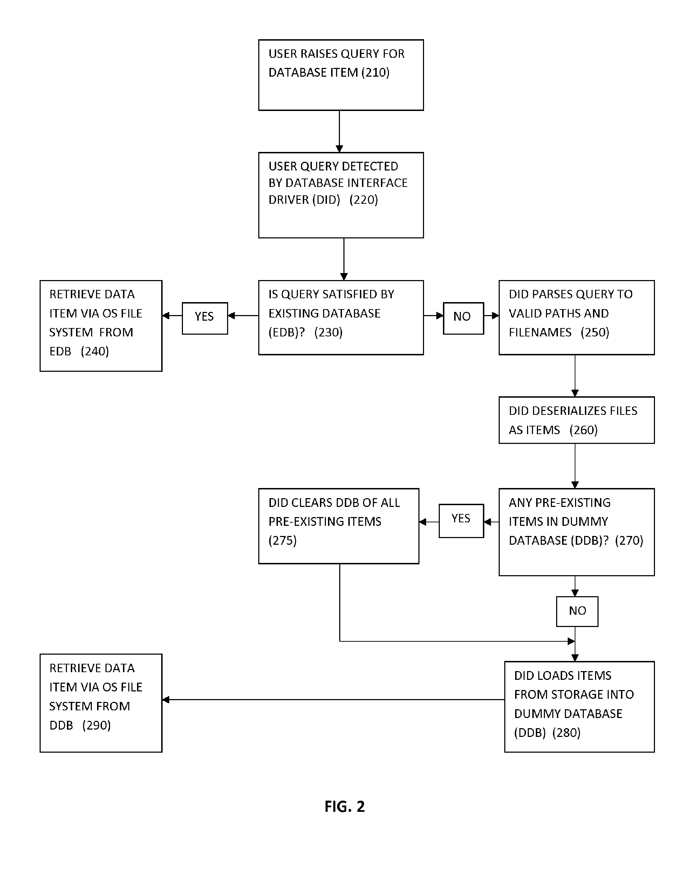

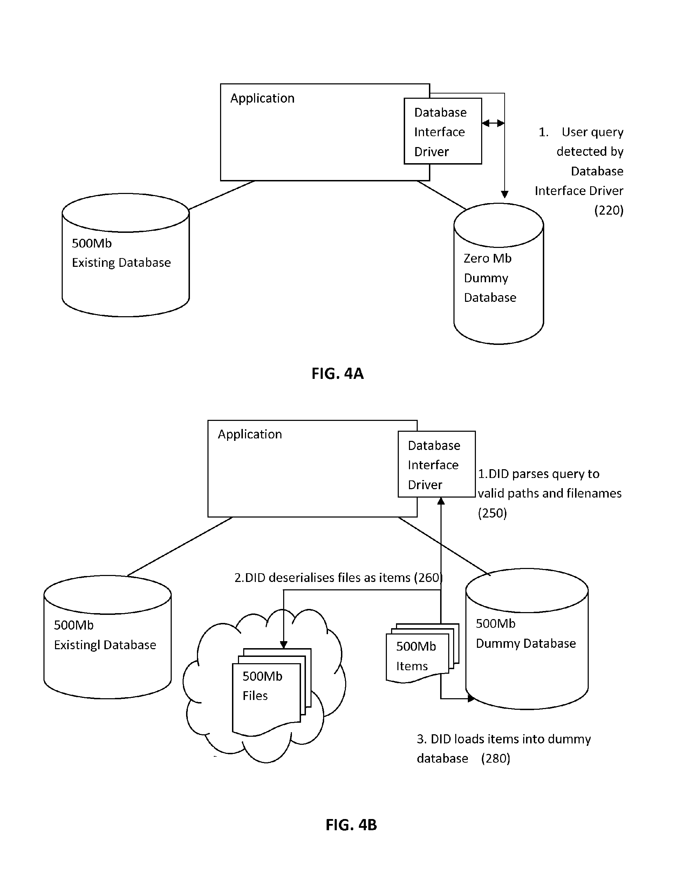

Referring to Fig. 2, in order to retrieve data items from storage, the user raises a query in the normal way (210). The database interface driver detects the query (220). Steps (210, 220) are also illustrated in Fig. 4A. If the data item is still in the active or existing database (230), the data is retrieved in the normal way via the operating system file system from the existing database (240). If not, dummy database is queried, by means of the database interface driver parsing the query to valid paths and filenames (250), fetching the relevant files from the disk or storage medium, and deserializing the files to data items (260) before loading them into the dummy database sequentially (280). Steps (250-280) are also illustrated in Fig. 4B.

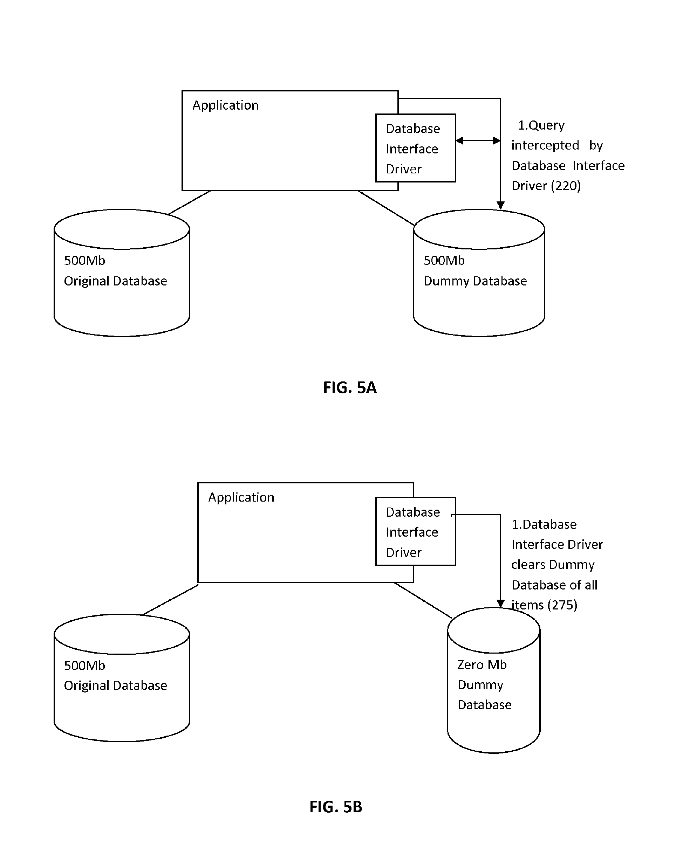

If there are pre-existing items in the dummy database when a new user query is enacted (270), the dummy database is cleared of all previous items that it was storing (275), effectively emptying it, before loading (280) from storage. This results in the dummy database being as small as possible, and need only be as large as the last item written to the dummy database. Steps (270, 275) are also illustrated in Figs. 5A and 5B. The process may then begin again.

It will be seen that in the latter case of retrieving an "archived" item from storage, once loaded in the dummy database (280), the operating system file system may retrieve and read the item from the dummy database (290). Thus, whether a requested item has been read from the existing database (240) or from the dummy database (290) will be completely transparent to the user. Items are therefore reachable throughout a network as any other files would be now that they have been serialized.

Before, multiple connections to the existing database were restricted by how many multiple connections were supported by the format or database schema. Now, by effectively using the dummy database as a proxy, these items are fetched using the method described above. Policy can dictate access permissions to be applied to files and their respective folders that may have been archived, allowing more flexibility and security for specific database items as required.

Using this unique approach, an existing client-based database's size is controlled and reduced, as well as its server counterpart if it exists, as it contains fewer items. Database items are accessible by many more concurrent users than normal. The maximum number of users is dictated by normal network restrictions and not by the maximum number of database connections as constrained by a particular format or database schema.

The present invention is therefore well suited, but not exclusively suited, to environments with many clients who wish to access a large database concurrently.

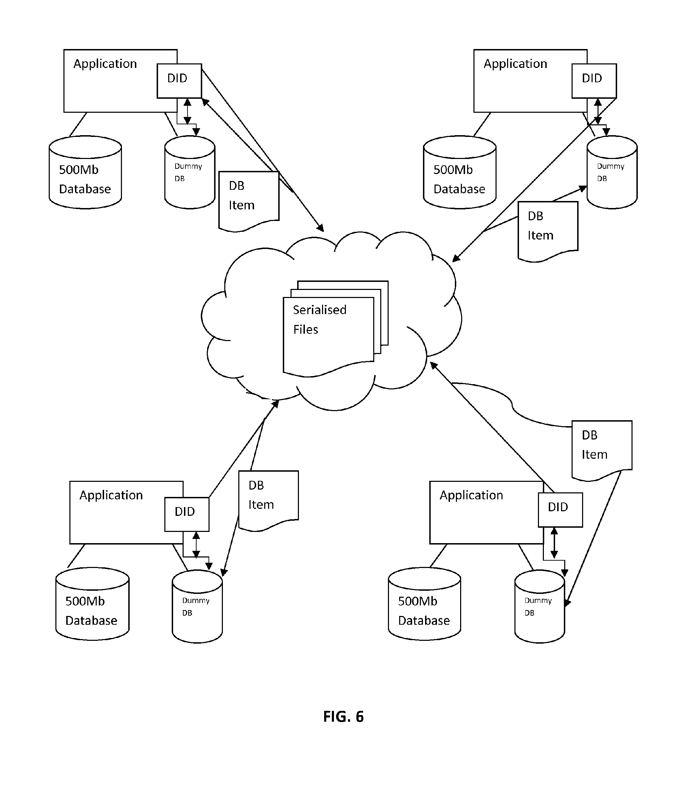

In another preferred embodiment of the invention, as shown with reference to Fig. 6, a large number of concurrent clients is possible because the database items are serialized. The clients connect to the location of the serialized files through VPN, P2P, LAN, WAN, etc. The maximum number of concurrent users is dictated by the type of network connection employed in each situation.

Each client has their own local dummy database which is mounted on initialisation of its respective application. The mounted dummy database connects to the location where the serialised files are stored. As each query is made or as each item is stored, the invention detects each query and command and fetches or writes the relevant file. The dummy database at each respective client in the network is cleared of all items as needed, keeping its size as low as possible.

Indexing an item to the dummy database involves parsing a path and filename based on the item's data. Once the path is established, the item is serialized to a data file and written to the networked storage medium. This requires the application to have write permission to the path.

Retrieving an item from the dummy database involves parsing paths and filenames based on the requested items' data. Once the paths are established, the items are deserialized in memory and streamed into the dummy database sequentially. The items will `stream' in sequentially.

Searching for an item can be achieved many ways. An index table can be created, mapping database tables, rows, columns or other objects to their respective paths. In this instance, the table is referred to, the paths noted and a search performed on each path for the relevant item. Alternatively, a search, multithreaded or otherwise, can be performed on all of the paths for the relevant items. If appropriate, the items can then be streamed into the dummy database and then the application's search function can then be applied as required.

Other embodiments of the present invention comprise a database interface driver which controls and manages how a database operates and changes how database entries are retrieved and stored. It is first necessary to have an empty data structure to act as an interface, such as the dummy database described above, mounted by its application at the client. Typically, this will be a client-side application with an instance of the dummy database mounted at the client, but those skilled in the art will readily appreciate that the invention may be performed as a server side application or service. In the latter case, multiple instances of the dummy database may be made available for access by clients as a transient interface means to temporarily hold data items as they are being transferred to or retrieved from storage. The transient interface may be local to one server or distributed amongst many servers. Likewise, as will be appreciated by those skilled in the art, storage may be embodied in many forms, accessible by a server, network of computers, via the internet, data centre, or cloud. When embodied as a service, the transient interface may act as a conduit for incoming archival data to a serializer, with serialized data items being transferred via a router to storage, and as a conduit for deserialized data files being read back as retrieval data items from storage. Serialization and deserialization may occur dynamically, on-the-fly, such that the interface is transient, as opposed to static in the case of a dummy database mounted and loaded at the client. Archival and retrieval services may be separated as separate services running on different servers. Again, to the networked user, the retrieval of data whether from the existing active database or of archived data from a remote storage location anywhere on the network will be totally transparent.

Potentially, the invention is therefore scalable to any databases available over very large networks.

The dummy database effectively sits parallel with existing databases. The database interface driver runs alongside the application program code and detects queries and commands to the dummy database as they are made. These queries and commands are then passed to an algorithm which deals with the archival and retrieval operations. Other databases which are mounted by the application are not affected.

It will be appreciated that the invention requires the location of where the serialized database items are stored to be set. This can be an IP address, network path, local path, etc. Once this has been established, the retrieval operations can operate reliably. This can be done by adding an option to the normal interface of adding the location, or it can be done by configuring the path in an .ini file or equivalent.

### Example Applications

The present invention allows a database to be as large as available storage resources rather than being constrained by file size limitations or the size of the storage medium on which it is located and allows as many concurrent users that the type of network connection employed permits.

### • Pharmacy/Hospital Records

An ongoing concern of medication dispensaries is knowing exactly what medications have already been prescribed to a particular patient, with records going back over many years. The invention will provide a cheap, scalable, persistent and centralised database that would allay these concerns.

### • Email

Corrupted email databases are a major concern amongst home and office users of popular email clients such as Microsoft Outlook, Lotus Domino, etc. The main cause of corruption is having too many emails accumulating and stored in "inboxes" at one time. The invention will control the size of each email database and also, if required, allow these mails to be accessible to all users in a network, while also taking into account file permissions and security.

For example, email archives can now been viewed not just by the user, but everyone in the organisation. So if a team was working on a project, everyone could access every email that was sent or received. This of course is protected by permissions, so if there are management folders which should not be seen by staff, these are locked to all except those permitted to view it. Another feature is a Merge folder, so one place where all emails sent and received by a user are merged, which makes filing those emails a lot easier. Only emails where a conversation thread has taken place are considered for Merge folder, so if an email is sent by the user but no reply received, this will not appear in the Merge. It also provides users with a very clever system where archived emails can be viewed as normal, without the user being conscious that they are being retrieved from storage, or filed as easily as though they are putting them in their own email folders. That this archive can then be viewed across an organisation is another key feature.

### • Border Control

With a large number of people crossing multiple borders each day a scalable, persistent and centralised database is essential. The invention provides this kind of database while allowing live monitoring by other departments.

### • Service Industry

The service industry, which includes banking, hospitality, government, etc., is becoming increasingly automated. Maintaining a live database of clients, the services provided to them and sundry data such as the preferences a client has, or other relevant data that helps provide a better service will be beneficial. The invention can provide this kind of database where a large number of concurrent connections is possible.

## Claims

1. A computer-implemented method of reducing the size of an existing database, comprising the steps of;
creating (110) a transient interface adapted to receive data items from the existing database,
reading (140) data items from the transient interface,
parsing (150) the data items to path and filename,
serializing (160) the data items as discrete files,
transferring (170) the serialized files to storage, and
removing the data items from the existing database.

2. The method of claim 1, wherein creating a transient interface comprises the step of;
mounting (110) a dummy database defining a data structure initially containing no data items.

3. The method of claim 2, wherein reading data items from the transient interface comprises the steps of;
moving (120) data items from the existing database to the dummy database,
wherein a database interface driver detects (130) the move event, and
wherein the database interface driver reads (140) data items in the dummy database.

4. The method of claim 1, further comprising retrieving database items from storage in response to a user query (210), comprising the steps of:
parsing (250) the query to valid paths and filenames,
deserializing (260) files as data items,
transferring (280) the deserialized data items to the transient interface, and
making the deserialized data items available to the user via the transient interface (290).

5. The method of claim 4, wherein a database interface driver detects (220) a user query.

6. The method of claim 4, wherein any one of the steps of parsing (250), deserializing (260) and transferring (280) are performed by a database interface driver.

7. The method of any of claims 4 to 6, wherein the transient interface is a dummy database defining a data structure initially containing no data items.

8. The method of claim 7, wherein the dummy database is cleared (275) of any pre-existing data before being loaded (208) with deserialized files from storage.

9. A database interface driver comprising:
means for mounting (110) a dummy database defining a data structure initially containing no data items.
means for moving (120) data items from the existing database to the dummy database,
means for detecting (130) the move event, and
means for reading (140) data items in the dummy database.

10. The database interface driver of claim 9, further comprising:
means for parsing (250) the query to valid paths and filenames,
means for deserializing (260) files as data items,
means for transferring (280) the deserialized data items to the dummy database, and
means for making the deserialized data items available to the user via the dummy database (290).

11. A computer program, which when executing on a computer or computer network, performs the steps of any one of claims 1 to 8.

12. The computer program of claim 11, when stored on a computer readable medium.
